# EUROPEAN PATENT APPLICATION

(11) **EP 4 832 274 A1**
(43) Date of publication of application: **28.10.2026**
(21) Application number: 23962183.2
(22) Date of filing: 20.12.2023
(51) Int. Cl.: H02B 13/035, H01T 4/08

(54) **GAS-INSULATED SWITCHGEAR**

(71) Applicant: Mitsubishi Electric Corporation, Tokyo 100-8310 (JP)
(72) Inventor: SHIRAGA, Sho, Tokyo 100-8310 (JP); KUROAKI, Shintaro, Tokyo 102-0073 (JP)
(74) Representative: Witte, Weller & Partner Patentanwälte mbB
(86) International application number: PCT/JP2023/045672
(87) International publication number: WO 2025/134262

(57) **Abstract**

A gas-insulated switchgear (100, 101, 102) includes an arrester (7) provided outside a pressure vessel (1), including a conductive arrester ground shielding layer (7c) as an outermost layer, including an arrester insulation layer (7b) covered with the arrester ground shielding layer (7c), connected to a main circuit (2) via an arrester connection bushing (6), and arranged so as to be contactable with and separable from the arrester connection bushing (6) by moving in a predetermined direction. Accordingly, it is possible to provide the gas-insulated switchgear (100, 101, 102) configured to allow replacement of the arrester (7) without recovering an insulating gas inside the pressure vessel (1).

## Description

### [Technical Field]

The present disclosure relates to a gas-insulated switchgear.

### [Background Art]

A gas-insulated switchgear in which an insulating gas such as SF₆ gas is sealed inside a pressure vessel is used as electrical equipment accommodating power receiving equipment in a power facility such as a substation or a power plant. Inside the pressure vessel, a main circuit is provided between a connection portion of a power cable that receives electric power from a power transmission line and a disconnector. An arrester is connected to the main circuit and protects the gas-insulated switchgear from an overcurrent caused by lightning or the like.

For example, in the invention described in Patent Literature 1, an arrester is provided inside a pressure vessel. Therefore, a connection portion between the arrester and a main circuit is insulated by the insulating gas sealed inside the pressure vessel. As a result, an overcurrent caused by lightning or the like flows to the arrester, so that the arrester can protect the gas-insulated switchgear from the overcurrent.

### [Citation List]

### [Patent Literature]

[Patent Literature 1]
International Publication No. 2015/019516

### [Summary of Invention]

### [Technical Problem]

However, in the invention described in Patent Literature 1, since the arrester is provided inside the pressure vessel, it is necessary to recover the insulating gas inside the pressure vessel when replacing the arrester. In this case, energization to the main circuit is stopped until the insulating gas is sealed in the pressure vessel again, and improvement in workability has been an issue.

The present disclosure has been made to solve the above-described problem, and an object thereof is to provide a gas-insulated switchgear configured to allow replacement of an arrester without recovering an insulating gas inside a pressure vessel.

### [Solution to Problem]

A gas-insulated switchgear according to the present disclosure is characterized by being provided with: a pressure vessel in which a main circuit is accommodated and an insulating gas is sealed; an arrester connection bushing connected to the main circuit and including an insulating bushing insulation layer covering a center conductor; and an arrester provided outside the pressure vessel, including a conductive arrester ground shielding layer as an outermost layer, including an arrester insulation layer covered with the arrester ground shielding layer, connected to the main circuit via the arrester connection bushing, and arranged so as to be contactable with and separable from the arrester connection bushing by moving in a predetermined direction.

### [Advantageous Effects of Invention]

According to the present disclosure, the gas-insulated switchgear is provided with an arrester provided outside the pressure vessel, including a conductive arrester ground shielding layer as an outermost layer, including an arrester insulation layer covered with the arrester ground shielding layer, connected to the main circuit via the arrester connection bushing, and arranged so as to be contactable with and separable from the arrester connection bushing by moving in a predetermined direction. Accordingly, it is possible to provide a gas-insulated switchgear configured to allow replacement of the arrester without recovering the insulating gas inside the pressure vessel.

### [Brief Description of Drawings]

FIG. 1 is a schematic cross-sectional view of a gas-insulated switchgear according to Embodiment 1.
FIG. 2 is a schematic cross-sectional view around an arrester in the gas-insulated switchgear according to Embodiment 1.
FIG. 3 is a schematic cross-sectional view showing a state when the arrester according to Embodiment 1 is separated from a bushing.
FIG. 4 is a schematic cross-sectional view of a gas-insulated switchgear according to Embodiment 2.
FIG. 5 is a schematic cross-sectional view of a gas-insulated switchgear according to Embodiment 3.

### [Description of Embodiments]

Hereinafter, a gas-insulated switchgear according to embodiments will be described with reference to the drawings. The following embodiments are merely examples, and it is possible to combine the embodiments as appropriate and modify each embodiment as appropriate. In the drawings, the same reference numerals are given to similar configurations. Note that in each drawing, relative dimensional relationships or shapes of respective constituent members may differ from actual ones.

### Embodiment 1

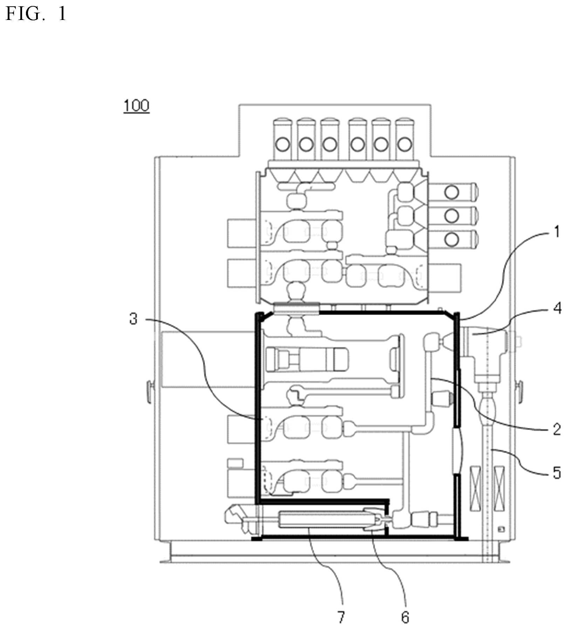

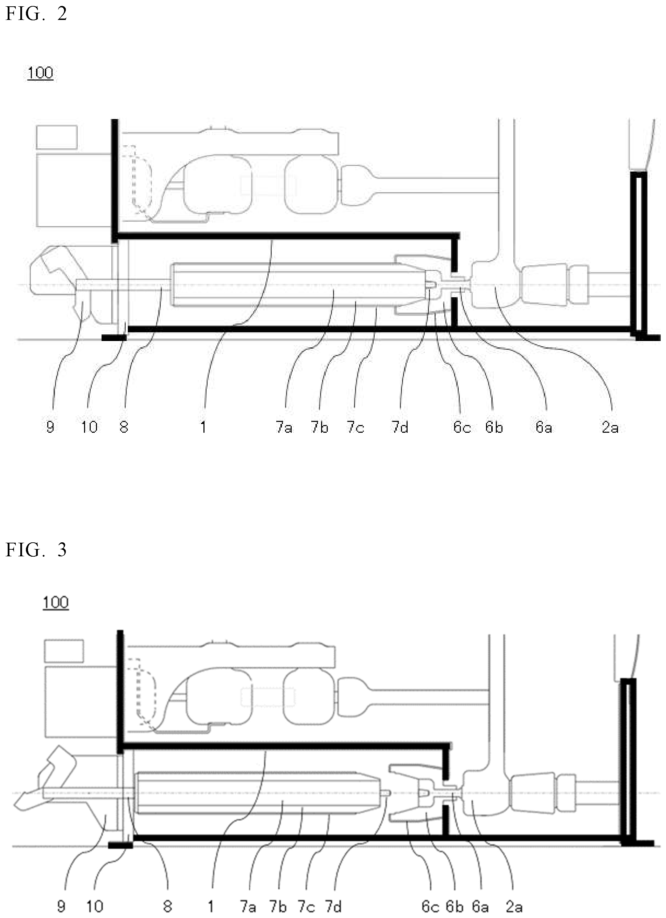

A gas-insulated switchgear 100 according to Embodiment 1 will be described with reference to FIG. 1, FIG. 2, and FIG. 3. FIG. 1 is a schematic cross-sectional view of the gas-insulated switchgear 100 according to Embodiment 1. FIG. 1 is a right side view of the gas-insulated switchgear 100, and the left side when viewing FIG. 1 from the front is the front of the gas-insulated switchgear 100. FIG. 2 is a schematic cross-sectional view around an arrester 7 in the gas-insulated switchgear 100 according to Embodiment 1. FIG. 3 is a schematic cross-sectional view showing a state when the arrester 7 according to Embodiment 1 is separated from a bushing. In the following description, terms indicating directions such as "upper", "lower", "right", "left", "front", and "rear" are used as appropriate for easy understanding, but these do not limit the embodiments. In the embodiments, the terms indicating the directions described above are used in a state where the gas-insulated switchgear 100 is viewed from the front.

As shown in FIG. 1, the gas-insulated switchgear 100 includes a pressure vessel 1, a main circuit 2, a disconnector 3, a cable connection bushing 4, a power cable 5, an arrester connection bushing 6, and an arrester 7. The pressure vessel 1 is an airtightly configured tank in which an insulating gas is sealed. The pressure vessel 1 is made of metal, for example, and is grounded to the earth using a conducting wire or the like. The insulating gas is, for example, SF₆ gas, N₂ gas, CO₂ gas, or dry air. In FIGS. 1 to 5, the pressure vessel 1 is provided at a lower portion of the gas-insulated switchgear 100 and is illustrated with a thick line.

The main circuit 2 and the disconnector 3 are accommodated inside the pressure vessel 1. The main circuit 2 connects the disconnector 3 and the cable connection bushing 4 via respective connectors. The cable connection bushing 4 is provided on a rear surface of the pressure vessel 1 so as to penetrate airtightly in the backside direction of the pressure vessel 1. The cable connection bushing 4 is connected via a cable head to the power cable 5 for receiving electric power from a power transmission line.

As shown in FIG. 2, the arrester connection bushing 6 is provided below the pressure vessel 1. The arrester connection bushing 6 is connected to the main circuit 2 via a pressure vessel internal conductor 2a which is a part of the main circuit 2. The arrester connection bushing 6 according to Embodiment 1 is provided so as to penetrate airtightly in the foreside direction of the pressure vessel 1.

As shown in FIG. 2, the arrester connection bushing 6 includes a center conductor 6a, a bushing insulation layer 6b, and a bushing ground shielding layer 6c. The arrester 7 includes a zinc oxide element 7a, an arrester insulation layer 7b, an arrester ground shielding layer 7c, and a connection terminal 7d.

The center conductor 6a is conductive and is provided so as to be covered with the bushing insulation layer 6b. A material of the bushing insulation layer 6b is, for example, ethylene propylene rubber, silicone rubber, epoxy resin, or the like. The pressure vessel internal conductor 2a, the center conductor 6a, and the zinc oxide element 7a are electrically connected. Thereby, the gas-insulated switchgear 100 can cause an overcurrent to flow from the main circuit 2 to the arrester 7.

The bushing insulation layer 6b is covered with the conductive bushing ground shielding layer 6c. The bushing ground shielding layer 6c is connected to the pressure vessel 1 and is covered with outside air outside the pressure vessel 1. The bushing ground shielding layer 6c is, for example, rubber based on butyl chloride or the like.

The arrester 7 is provided outside the pressure vessel 1 and is connected to the main circuit 2 via the arrester connection bushing 6. The zinc oxide element 7a is formed by stacking disk-shaped elements. When an overvoltage is applied, impedance of the zinc oxide element 7a decreases, and the zinc oxide element 7a can cause an overcurrent to flow to a ground side. Thereby, the arrester 7 can protect the gas-insulated switchgear 100 from an overcurrent.

The zinc oxide element 7a is covered with the insulating arrester insulation layer 7b having a cylindrical shape. Thereby, the arrester 7 can maintain insulating performance even when arranged outside the pressure vessel 1 as shown in FIG. 1, and can withstand an impact when an overvoltage is applied. A material of the arrester insulation layer 7b is, for example, ethylene propylene rubber, silicone rubber, epoxy resin, or the like. A cross-sectional shape of the arrester insulation layer 7b is not limited to a circular shape, and the same effect can be obtained even if it is a polygonal shape such as a quadrangular shape, for example.

The arrester 7 includes the conductive arrester ground shielding layer 7c as an outermost layer. That is, the arrester ground shielding layer 7c is provided outside the pressure vessel 1 and is covered with outside air. The arrester insulation layer 7b is covered with the arrester ground shielding layer 7c. The arrester ground shielding layer 7c is, for example, rubber based on butyl chloride or the like.

The connection terminal 7d is electrically connected to the center conductor 6a. The connection terminal 7d is provided between the center conductor 6a and the zinc oxide element 7a. The center conductor 6a is provided with a recess into which the connection terminal 7d can be fitted. Thereby, the connection terminal 7d can electrically connect the zinc oxide element 7a and the center conductor 6a, and connect the arrester 7 to the arrester connection bushing 6.

The arrester insulation layer 7b and the bushing insulation layer 6b are arranged so as to be in close contact with each other in order to maintain insulating performance of the arrester 7. It is preferable that the arrester insulation layer 7b and the bushing insulation layer 6b are made of materials having different Young's moduli and Poisson's ratios. For example, when one of the materials is ethylene propylene rubber, silicone rubber, or the like, it is preferable that the other material is epoxy resin or the like having a higher Young's modulus and a lower Poisson's ratio than those of the former. Thereby, adhesion between the arrester insulation layer 7b and the bushing insulation layer 6b is enhanced.

The arrester insulation layer 7b has, for example, a convex tapered shape at one end that is in close contact with the bushing insulation layer 6b. The bushing insulation layer 6b has a concave tapered shape configured to fit with the tapered shape of the arrester insulation layer 7b at one end that is in close contact with the arrester insulation layer 7b. Thereby, the arrester 7 has a plug-in structure in which the arrester 7 is easily inserted into and removed from the arrester connection bushing 6. Note that the gas-insulated switchgear 100 achieves the same effect even with a structure in which the arrester insulation layer 7b has a concave tapered shape and the bushing insulation layer 6b has a convex tapered shape.

An arrester operating shaft 8 is provided at the other end of the arrester 7 that is not connected to the arrester connection bushing 6. The arrester operating shaft 8 is supported by a flange 10. Thereby, the arrester 7 is held movably in a horizontal direction. The arrester operating shaft 8 is provided with an arrester operating mechanism 9. The arrester operating mechanism 9 can move the arrester 7 in the horizontal direction via the arrester operating shaft 8. Thereby, the arrester 7 has a structure that allows the arrester 7 to be arranged so as to be contactable with and separable from the arrester connection bushing 6 at the time of connection with and disconnection from the arrester connection bushing 6.

When the arrester operating mechanism 9 operates in a state where the connection terminal 7d and the center conductor 6a shown in FIG. 2 are in contact with each other, the arrester 7 moves forward of the gas-insulated switchgear 100 in the horizontal direction as shown in FIG. 3. At this time, the connection terminal 7d and the center conductor 6a are separated from each other. That is, the arrester 7 and the arrester connection bushing 6 are separated from each other. This enables replacement of the arrester 7.

Then, by the operation of the arrester operating mechanism 9, a new arrester 7 after replacement moves rearward of the gas-insulated switchgear 100 in the horizontal direction. At this time, a connection terminal 7d of the new arrester 7 and the center conductor 6a come into contact. Thereby, the new arrester 7 is connected to the arrester connection bushing 6. At this time, the arrester operating mechanism 9 sufficiently applies a contact surface pressure at a contact surface between the arrester 7 and the arrester connection bushing 6. Thereby, the arrester operating mechanism 9 can suppress entrapment of air at the contact surface between the arrester 7 and the arrester connection bushing 6, and maintain insulating performance at an insulating interface.

Here, the zinc oxide element 7a, the arrester ground shielding layer 7c, and the bushing ground shielding layer 6c are electrically connected to the arrester operating shaft 8. The arrester operating shaft 8 is grounded to the earth. Therefore, the zinc oxide element 7a, the arrester ground shielding layer 7c, and the bushing ground shielding layer 6c are grounded to the earth via the arrester operating shaft 8. Thereby, the zinc oxide element 7a can cause an overcurrent to flow to the ground. Further, the arrester ground shielding layer 7c and the bushing ground shielding layer 6c can cause electric charges charged on a surface of the arrester insulation layer 7b and a surface of the bushing insulation layer 6b to flow to the ground.

As described above, the gas-insulated switchgear 100 according to Embodiment 1 includes the arrester 7 which is provided outside the pressure vessel 1, includes the conductive arrester ground shielding layer 7c as the outermost layer, includes the arrester insulation layer 7b covered with the arrester ground shielding layer 7c, is connected to the main circuit 2 via the arrester connection bushing 6, and is arranged so as to be contactable with and separable from the arrester connection bushing 6 by moving in the predetermined direction. With the above configuration, in the gas-insulated switchgear 100, since the arrester 7 is provided outside the pressure vessel 1, the arrester 7 can be replaced without recovering the insulating gas sealed inside the pressure vessel 1. This makes it possible to reduce time during which energization to the main circuit 2 is stopped when replacing the arrester 7, compared with a configuration of a conventional technique in which an arrester is provided inside a pressure vessel.

Further, since it is not necessary to provide a space for the arrester 7 inside the pressure vessel 1, the gas-insulated switchgear 100 makes it possible to downsize the pressure vessel 1. This allows the gas-insulated switchgear 100 to reduce cost for manufacturing the pressure vessel 1.

The arrester insulation layer 7b and the bushing insulation layer 6b are covered with the arrester ground shielding layer 7c and the bushing ground shielding layer 6c, respectively. With the above configuration, the arrester ground shielding layer 7c and the bushing ground shielding layer 6c can discharge electric charges, induced by an overcurrent and charged on the surface of the arrester insulation layer 7b and the surface of the bushing insulation layer 6b, to the ground. Further, the arrester ground shielding layer 7c and the bushing ground shielding layer 6c can shield electric fields generated from the arrester connection bushing 6 and the arrester 7.

The arrester insulation layer 7b and the bushing insulation layer 6b have tapered shapes that allow them to fit with each other. With the above configuration, the arrester operating mechanism 9 suppresses entrapment of air at the contact surface between the arrester 7 and the arrester connection bushing 6 by the contact surface pressure at the contact surface between the arrester 7 and the arrester connection bushing 6, making it possible to maintain insulating performance at the insulating interface.

Further, since the arrester insulation layer 7b and the bushing insulation layer 6b form a plug-in structure in which the arrester 7 is easily inserted into and removed from the arrester connection bushing 6, workability at the time of replacing the arrester 7 is improved. Thereby, since the gas-insulated switchgear 100 has a structure in which the arrester 7 is easily detachable, workability when the gas-insulated switchgear 100 is installed can be improved.

Further, since the gas-insulated switchgear 100 does not require an opening/closing switch for performing work of disconnecting the arrester 7 from the main circuit 2 from outside the pressure vessel 1, the number of parts and cost can be reduced. Further, in the gas-insulated switchgear 100, since the arrester 7 can be easily disconnected from the arrester connection bushing 6, even when a short circuit or a ground fault occurs in the arrester 7, influence on devices inside the pressure vessel 1 can be suppressed.

The arrester insulation layer 7b and the bushing insulation layer 6b differ in Young's modulus and Poisson's ratio. That is, when the Young's modulus of the arrester insulation layer 7b is higher than the Young's modulus of the bushing insulation layer 6b, the Poisson's ratio of the arrester insulation layer 7b is lower than the Poisson's ratio of the bushing insulation layer 6b, and when the Young's modulus of the arrester insulation layer 7b is lower than the Young's modulus of the bushing insulation layer 6b, the Poisson's ratio of the arrester insulation layer 7b is higher than the Poisson's ratio of the bushing insulation layer 6b. With the above configuration, adhesion between the arrester insulation layer 7b and the bushing insulation layer 6b is enhanced, so that insulating performance of the arrester 7 can be maintained even with a configuration in which the arrester 7 is provided outside the pressure vessel 1.

In Embodiment 1, the direction in which the arrester 7 moves has been described as the horizontal direction, but the direction is not limited thereto. That is, the same effect can be obtained as long as the arrester 7 can move in a predetermined direction. Here, the predetermined direction means a fixed direction. Therefore, the predetermined direction includes not only the horizontal direction or a vertical direction but also any direction in which the arrester 7 can move so as to be contactable with and separable from the arrester connection bushing 6.

Further, grounding methods of the arrester ground shielding layer 7c and the bushing ground shielding layer 6c are not limited to those described above. For example, the arrester ground shielding layer 7c and the bushing ground shielding layer 6c may be grounded to the earth by a conducting wire.

### Embodiment 2

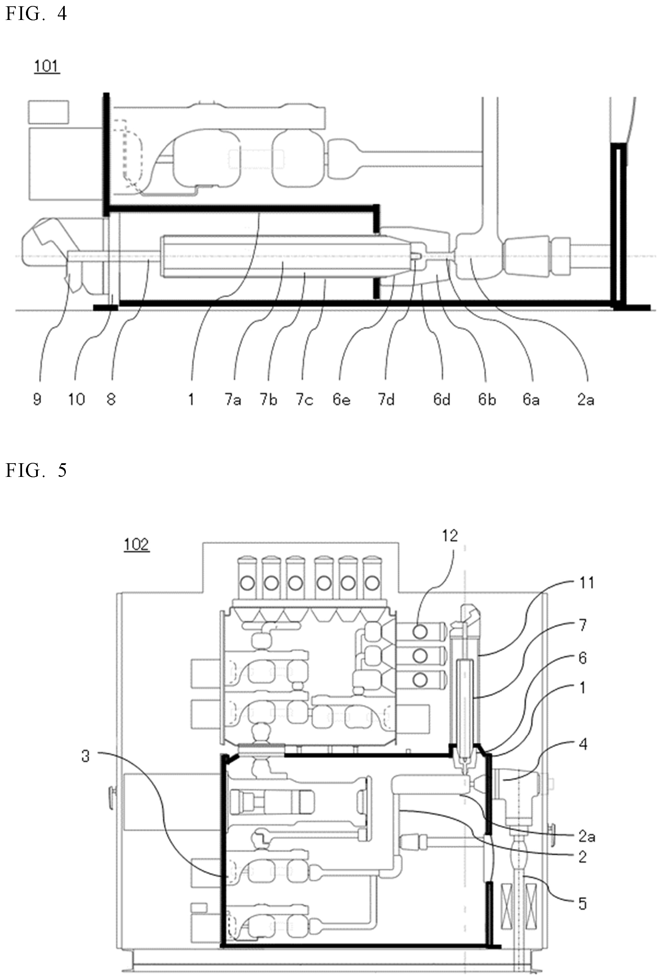

A gas-insulated switchgear 101 according to Embodiment 2 will be described with reference to FIG. 4. FIG. 4 is a schematic cross-sectional view of the gas-insulated switchgear 101 according to Embodiment 2. In the gas-insulated switchgear 100 according to Embodiment 1, the arrester connection bushing 6 is provided outside the pressure vessel 1 and includes the conductive bushing ground shielding layer 6c covering the bushing insulation layer 6b. The gas-insulated switchgear 101 according to Embodiment 2 differs from the gas-insulated switchgear 100 according to Embodiment 1 in that a non-contact region 6d, which does not contact the arrester 7, of a surface of the bushing insulation layer 6b is insulated inside the pressure vessel 1 by an insulating gas. Configurations similar to those of Embodiment 1 are denoted by the same reference numerals. Detailed description of configurations similar to those of Embodiment 1 will be omitted, and configurations different from Embodiment 1 will be mainly described.

As shown in FIG. 4, the arrester connection bushing 6 in Embodiment 2 is airtightly connected to the pressure vessel 1 via the bushing insulation layer 6b. Here, the non-contact region 6d, which does not contact the arrester 7, of the surface of the bushing insulation layer 6b is arranged inside the pressure vessel 1 and is insulated by the insulating gas. A contact region 6e, which contacts the arrester 7, of the surface of the bushing insulation layer is arranged outside the pressure vessel 1 and is covered with atmosphere when not connected to the arrester insulation layer 7b.

The arrester 7 is provided so as to penetrate in the backside direction of the pressure vessel 1 when the arrester insulation layer 7b and the bushing insulation layer 6b are connected. Even in this case, since the arrester insulation layer 7b and the bushing insulation layer 6b are arranged so as to be in close contact with each other, the insulating performance of the arrester 7 is maintained.

Similarly to Embodiment 1, the gas-insulated switchgear 101 according to Embodiment 2 includes the arrester 7 which is provided outside the pressure vessel 1, includes the conductive arrester ground shielding layer 7c as the outermost layer, includes the arrester insulation layer 7b covered with the arrester ground shielding layer 7c, is connected to the main circuit 2 via the arrester connection bushing 6, and is arranged so as to be contactable with and separable from the arrester connection bushing 6 by moving in the predetermined direction. With the above configuration, in the gas-insulated switchgear 101, since the arrester 7 is provided outside the pressure vessel 1, the arrester 7 can be replaced without recovering the insulating gas sealed inside the pressure vessel 1. This makes it possible to reduce time during which energization to the main circuit 2 is stopped when replacing the arrester 7, compared with a configuration of a conventional technique in which an arrester is provided inside a pressure vessel.

Further, in the gas-insulated switchgear 101 according to Embodiment 2, the non-contact region 6d, which does not contact the arrester 7, of the surface of the bushing insulation layer 6b is arranged inside the pressure vessel 1 and is insulated by the insulating gas. With the above configuration, an electric field generated from the arrester connection bushing 6 is insulated by the insulating gas. Thereby, the gas-insulated switchgear 101 can have a configuration in which the bushing ground shielding layer 6c for flowing electric charges charged on the surface of the bushing insulation layer 6b to the ground is not provided. Therefore, since the gas-insulated switchgear 101 does not need to be provided with the bushing ground shielding layer 6c, the number of parts and cost can be reduced compared to Embodiment 1.

### Embodiment 3

A gas-insulated switchgear 102 according to Embodiment 3 will be described with reference to FIG. 5. FIG. 5 is a schematic cross-sectional view of the gas-insulated switchgear 102 according to Embodiment 3. In the gas-insulated switchgear 100 according to Embodiment 1, the arrester 7 is provided so as to move in the horizontal direction by the arrester operating mechanism 9. The gas-insulated switchgear 102 according to Embodiment 3 differs from the gas-insulated switchgear 100 according to Embodiment 1 in that the arrester 7 is provided so as to move in a vertical direction by the arrester operating mechanism 9. Configurations similar to those of Embodiment 1 are denoted by the same reference numerals. Detailed description of configurations similar to those of Embodiment 1 will be omitted, and configurations different from Embodiment 1 will be mainly described.

As shown in FIG. 5, the arrester connection bushing 6 is provided above the pressure vessel 1. In the gas-insulated switchgear 102 shown in FIG. 5, the non-contact region 6d, which does not contact the arrester 7, of the surface of the bushing insulation layer 6b is arranged inside the pressure vessel 1 and is insulated by the insulating gas similarly to Embodiment 2, but the present disclosure is not limited thereto. That is, in the gas-insulated switchgear 102 according to Embodiment 3, similarly to Embodiment 1, the arrester connection bushing 6 may be provided outside the pressure vessel 1 and may include the conductive bushing ground shielding layer 6c covering the bushing insulation layer 6b.

The arrester 7 is provided outside the pressure vessel 1 and is supported by a support 11 also provided above and outside the pressure vessel 1. In the state shown in FIG. 5, when the arrester operating mechanism 9 operates, the arrester 7 moves upward of the gas-insulated switchgear 102 in the vertical direction. As described above, the direction in which the arrester 7 moves is not limited to the horizontal direction, and the same effect can be obtained as long as the arrester 7 can move in a predetermined direction. Therefore, even if the arrester 7 moves in the vertical direction as in the gas-insulated switchgear 102 according to Embodiment 3, the same effect can be obtained.

In the state shown in FIG. 5, when the arrester 7 moves upward of the gas-insulated switchgear 102 in the vertical direction, the arrester 7 and the arrester connection bushing 6 are separated from each other. This allows replacement of the arrester 7.

Then, by the operation of the arrester operating mechanism 9, a new arrester 7 after replacement moves downward of the gas-insulated switchgear 102 in the vertical direction. At this time, the new arrester 7 is connected to the arrester connection bushing 6.

Similarly to Embodiment 1, the gas-insulated switchgear 102 according to Embodiment 3 includes the arrester 7 which is provided outside the pressure vessel 1, includes the conductive arrester ground shielding layer 7c as the outermost layer, includes the arrester insulation layer 7b covered with the arrester ground shielding layer 7c, is connected to the main circuit 2 via the arrester connection bushing 6, and is arranged so as to be contactable with and separable from the arrester connection bushing 6 by moving in the predetermined direction. With the above configuration, in the gas-insulated switchgear 102, since the arrester 7 is provided outside the pressure vessel 1, the arrester 7 can be replaced without recovering the insulating gas sealed inside the pressure vessel 1. This makes it possible to reduce time during which energization to the main circuit 2 is stopped when replacing the arrester 7, compared with a configuration of a conventional technique in which an arrester is provided inside a pressure vessel.

Further, the gas-insulated switchgear 102 according to Embodiment 3 has the arrester 7 provided so as to be contactable with and separable from the arrester connection bushing 6 by moving in the vertical direction. With the above configuration, the overall height of the gas-insulated switchgear 102 can be reduced compared to a case where the arrester 7 is provided below the pressure vessel 1 to move the arrester 7 in the horizontal direction as in the gas-insulated switchgear 100 according to Embodiment 1. Thereby, even when there is a restriction in a height direction in a space where the gas-insulated switchgear 102 is installed, the gas-insulated switchgear 102 including the arrester 7 provided outside the pressure vessel 1 can be adopted.

Also in Embodiment 3, the arrester 7 has a plug-in structure in which the arrester 7 is easily inserted into and removed from the arrester connection bushing 6. Therefore, in the gas-insulated switchgear 102, when the arrester 7 interferes with a device such as a busbar 12, maintenance work or installation work of the device such as the busbar 12 can be performed in a state where the arrester 7 is removed from the arrester connection bushing 6. Thereby, it is possible to avoid interference of the arrester 7 provided above the pressure vessel 1 during maintenance work or installation work of the device such as the busbar 12. As described above, since the arrester 7 has the plug-in structure in which the arrester 7 is easily inserted into and removed from the arrester connection bushing 6, it is possible to provide flexibility in processes during maintenance work or installation work of the gas-insulated switchgear 102.

Note that the direction in which the arrester 7 moves is not limited to the horizontal direction or the vertical direction. The arrester 7 in Embodiment 3 may be provided so as to move, for example, in a direction at an angle shifted by about 45° rearward of the pressure vessel 1 from the vertical direction. That is, the arrester 7 may be provided so as to move rearward and obliquely upward of the pressure vessel 1. A value of the angle when shifting the direction in which the arrester 7 moves is arbitrarily set. With the above configuration, it is possible to avoid interference of the arrester 7 provided above the pressure vessel 1 with a device such as the busbar 12. Therefore, the gas-insulated switchgear 102 can improve work efficiency during maintenance work or installation work of the device such as the busbar 12.

### [Reference Signs List]

100, 101, 102: gas-insulated switchgear; 1: pressure vessel; 2: main circuit; 2a: pressure vessel internal conductor; 3: disconnector; 4: cable connection bushing; 5: power cable; 6: arrester connection bushing; 6a: center conductor; 6b: bushing insulation layer; 6c: bushing ground shielding layer; 6d: non-contact region; 6e: contact region; 7: arrester; 7a: zinc oxide element; 7b: arrester insulation layer; 7c: arrester ground shielding layer; 7d: connection terminal; 8: arrester operating shaft; 9: arrester operating mechanism; 10: flange; 11: support; 12: busbar.

## Claims

1. A gas-insulated switchgear comprising:
a pressure vessel in which a main circuit is accommodated and an insulating gas is sealed;
an arrester connection bushing connected to the main circuit and comprising an insulating bushing insulation layer covering a center conductor; and
an arrester provided outside the pressure vessel, comprising a conductive arrester ground shielding layer as an outermost layer, comprising an arrester insulation layer covered with the arrester ground shielding layer, connected to the main circuit via the arrester connection bushing, and arranged so as to be contactable with and separable from the arrester connection bushing by moving in a predetermined direction.

2. The gas-insulated switchgear according to claim 1,
wherein the arrester connection bushing further comprises a conductive bushing ground shielding layer provided outside the pressure vessel and covering the bushing insulation layer.

3. The gas-insulated switchgear according to claim 1,
wherein a non-contact region, which does not contact the arrester, of a surface of the bushing insulation layer is arranged inside the pressure vessel, and a contact region, which contacts the arrester, of the surface of the bushing insulation layer is arranged outside the pressure vessel.

4. The gas-insulated switchgear according to any one of claims 1 to 3,
wherein the arrester insulation layer and the bushing insulation layer have tapered shapes configured to fit with each other.

5. The gas-insulated switchgear according to any one of claims 1 to 4,
wherein the arrester insulation layer and the bushing insulation layer differ in Young's modulus and Poisson's ratio,
wherein when the Young's modulus of the arrester insulation layer is higher than the Young's modulus of the bushing insulation layer, the Poisson's ratio of the arrester insulation layer is lower than the Poisson's ratio of the bushing insulation layer, and
wherein when the Young's modulus of the arrester insulation layer is lower than the Young's modulus of the bushing insulation layer, the Poisson's ratio of the arrester insulation layer is higher than the Poisson's ratio of the bushing insulation layer.

6. The gas-insulated switchgear according to any one of claims 1 to 5,
wherein the predetermined direction is a horizontal direction or a vertical direction.
